Europäisches Patentamt

European Patent Office

Office européen des brevets

(11) Veröffentlichungsnummer: **0 271 112**
**A1**

(12) **EUROPÄISCHE PATENTANMELDUNG**

(21) Anmeldenummer: **87118386.9**

(22) Anmeldetag: **11.12.87**

(51) Int. Cl.⁴: **B65D 41/34**

(30) Priorität: **12.12.86 DE 3642582**

(43) Veröffentlichungstag der Anmeldung:
**15.06.88 Patentblatt 88/24**

(84) Benannte Vertragsstaaten:
**AT BE CH DE ES FR GB IT LI NL**

(71) Anmelder: **Thoma, Eberhard**
**Schererweg 23**
**D-8110 Murnau(DE)**

(72) Erfinder: **Thoma, Eberhard**
**Schererweg 23**
**D-8110 Murnau(DE)**

(74) Vertreter: **Görg, Klaus, Dipl.-Ing. et al**
**Hoffmann, Eitle & Partner Arabellastrasse 4**
**(Sternhaus)**
**D-8000 München 81(DE)**

(54) **Zugangssicherer einteiliger Schraubdeckel.**

(57) Die Erfindung bezieht sich auf einen zugangssicheren, einteiligen Schraubdeckel für Behältnisse
und insbesondere Flaschen, mit einem ein Innengewinde (10) aufweisenden Deckelhauptkörper (14)
und mindestens einem Nebenkörper (16a; 16b), der
im Öffnungsbereich des Deckelhauptkörpers mit diesem einstückig durch ein Gelenk (26; 32) verbunden
ist, durch das der Nebenkörper von einer
Herstellungs-Ausgangslage in eine Gebrauchslage
bringbar ist, wobei der Nebenkörper durch eine Sollbruchstelle mit dem Deckelhauptkörper verbunden
und mit mindestens einer Rastnase (36) versehen
ist, mit der der Nebenkörper am Ende des Aufschraubvorganges hinter einen Vorsprung (38) des
Behältnisses derart rastbar ist, daß bei Abschrauben
die Sollbruchstelle bricht. Die Sollbruchstelle wird
hier von der Gelenkstelle gebildet, über die der
Nebenkörper am Hauptkorper angeschlossen ist.

Fig.1a

## Zugangssicherer einteiliger Schraubdeckel

Die Erfindung bezieht sich auf einen zugangssicheren, einteiligen Schraubdeckel für Behältnisse und insbesondere Flaschen, mit einem ein Innengewinde aufweisenden Deckelhauptkörper und mindestens einem Nebenkörper, der im Öffnungsbereich des Deckelhauptkörpers mit diesem einstückig durch ein Gelenk verbunden ist, durch das der Nebenkörper von einer Herstellungs-Ausgangslage in eine Gebrauchslage bringbar ist, wobei der Nebenkörper durch eine Sollbruchstelle mit dem Deckelhauptkörper verbunden und mit mindestens einer Rastnase versehen ist, mit der der Nebenkörper am Ende des Aufschraubvorganges hinter einen Vorsprung des Behältnisses derart rastbar ist, daß beim Abschrauben die Sollbruchstelle bricht.

Ein derartiger Schraubdeckel ist aus der DE-OS 26 21 117 bekannt. Es besteht hier die Möglichkeit, den Deckelhauptkörper und den Nebenkörper, wenn beide aus Kunststoff hergestellt werden, in einem Spritzvorgang herzustellen und dann den Nebenkörper um das Gelenk in die Gebrauchslage zu klappen. Allerdings ist vorgesehen, daß der Nebenkörper in seiner Gebrauchslage in einem zusätzlichen Arbeitsgang verschweißt oder verklebt werden muß, sofern das eine oder das andere bei Verwendung des jeweiligen Materials möglich ist. Diese Schweiß-oder Klebestelle bildet die erwähnte Sollbruchstelle, die beim Abschrauben des Schraubdeckels brechen soll. Daraus resultieren jedoch zwei wesentliche Nachteile. Der eine Nachteil besteht darin, daß der Deckel wieder aufgeschraubt und somit die Verbindung, zunächst unsichtbar, wieder hergestellt werden kann, mit der Folge, daß der Flasche letztlich nicht ansehbar ist, ob der Schraubverschluß bereits einmal entfernt worden ist. Ein weiterer, wesentlicher Nachteil besteht darin, daß entweder der Nebenkörper mit seinem Gelenk störend am Schraubdeckel verbleibt oder gegebenenfalls in einem getrennten Vorgang abgerissen werden muß.

Außerdem werden relativ großflächige Gelenke verwendet, so daß es schwierig ist, in einem automatischen Vorgang das Einklappen des Nebenkörpers so vorzunehmen, daß ein gezieltes Einführen der Nase des Nebenkörpers in eine Ausnehmung des Deckelhauptkörpers erfolgen kann (zur Vorbereitung der Stelle, an der das Verkleben oder Thermoverschweißen erfolgt).

Es ist daher Aufgabe der Erfindung, einen neuartigen, zugangssicheren, einteiligen Schraubdeckel für Behältnisse und insbesondere Flaschen zu schaffen, bei dem bei möglichst einfacher Herstellung gewährleistet ist, daß der Nebenkörper weder an der Flasche noch am Deckelhauptkörper verbleibt.

Diese Aufgabe wird erfindungsgemäß dadurch gelöst, daß das Gelenk selbst als Sollbruchstelle ausgebildet ist.

Diese Lösung hat den wesentlichen Vorteil, daß bei einfacher Herstellung des Schraubdeckels mit Haupt-und Nebenkörper nicht nur auf einfache Weise ein automatisches Einschwenken des Nebenkörpers in die Gebrauchslage möglich ist, sondern insbesondere auch gewährleistet ist, daß der Nebenkörper nach dem Brechen der Sollbruchstelle weder am Schraubdeckel noch am Behältnis, beispielsweise einer Flasche, verbleibt.

Zur Erzielung eines genaueren und leichteren Bewegens des Nebenkörpers in die Gebrauchslage, für eine einfachere Gestaltung des Spritzgießwerkzeugs, zur Erzielung eines geringeren Rückdrehbestrebens des Nebenkörpers aus der Gebrauchslage und zur Bildung einer gezielt angeordneten Sollbruchstelle ist das Gelenk vorzugsweise als Doppelgelenk mit einem Zwischenstück ausgebildet, das über ein erstes Gelenk mit dem Deckelhauptkörper und über ein zweites Gelenk mit dem Nebenhauptkörper verbunden ist. Dabei können beide Gelenke des Doppelgelenkes oder aber jeweils nur eines der Gelenke als Sollbruchstelle ausgebildet sein.

Zur Gewährleistung einer definierten Endlage des Nebenkörpers ist das Zwischenstück des Doppelgelenkes so als Anschlagteil ausgebildet, daß dieses die Bewegung des Nebenkorpers in die Gebrauchslage begrenzt, indem das Zwischenstück mit einer bestimmten Anschlagfläche an eine entsprechende Gegenfläche des Hauptkörpers anschlägt, wenn die Gebrauchslage erreicht wird. Dadurch ist auch gewährleistet, daß ein Einrastvorgang in der Gebrauchslage gezielter eingeleitet werden kann.

Das Gelenk kann als sogenanntes Filmscharnier ausgebildet sein. Es besteht aber auch die Möglichkeit, das Gelenk als mindestens ein, zwei oder mehrere Stege auszubilden, die selbst als Sollbruchteile wirken.

Entsprechend einer bestimmten Ausführungsform ist der Nebenkörper als Teil eines Ringkörpers ausgebildet, der in seiner Gebrauchslage an einen Öffnungsrand des Deckelhauptkörpers anliegt und dort so durch eine Halteverbindungsanordnung festgelegt ist, daß beim Abschrauben des Deckelhauptkörpers zuerst die Sollbruchstelle bricht und sich dann beim Weiterschrauben die Halteverbindungsanordnung löst. Dadurch ist sichergestellt, daß zunächst der Nebenkörper in seiner Lage festgehalten wird, um ein sicheres Brechen der Sollbruchstelle zu gewährleisten. Dann erst kann sich der Nebenkörper von seiner Verbindung an der Halteverbindungsanordnung lösen, mit der Folge, daß der Nebenkörper an keiner Stelle weder mit dem Behältnis noch mit dem Schraubverschluß in Verbindung bleibt.

Vorzugsweise sind diametral gegenüberliegend zwei Ringkörper am Deckelhauptkörper vorgesehen. Diese sind entsprechend einer besonderen Ausgestaltung halbkreisförmig ausgebildet und weisen an ihren freien Enden Rastnasen auf, die hinter einem Vorsprung am Deckelhauptkörper einrasten. Diese Rastnasen bilden mit dem Vorsprung die genannte Halteverbindungsanordnung, die sich nach dem Brechen der Sollbruchstelle löst.

Eine andere Lösungsvariante besteht darin, daß der Nebenkörper lediglich als Lasche, vorzugsweise als rechteckiger Lappen, ausgebildet ist, der an die mit dem Gewinde versehene Innenwand des Deckelhauptkörpers anlegbar ist, wobei es nicht unbedingt notwendig ist, den Lappen in der Gebrauchslage festzulegen, da die Lappen stets zur inneren Abschlußwand des Deckelhauptkörpers gerichtet bleiben und daher sich die Lasche bzw. der Lappen an die Innenseite des Deckelhauptkörpers anlegt, wenn der Schraubdeckel aufgeschraubt wird. Dieses Abstützen bewirkt auch eine ausreichende Halterung dann, wenn der Schraubdeckel abgeschraubt und eine Gegenkraft auf die Lasche ausgeübt werden muß, wenn die Sollbruchstelle bricht.

Vorzugsweise ist die Lasche in einer an der Innenwand des Deckelhauptkörpers ausgebildeten Ausnehmung einlegbar.

Entsprechend einer vorteilhaften Ausgestaltung schließt die Lasche in der an die Innenwand angelegten Gebrauchslage eine Durchbrechung des Deckelhauptkörpers nach außen hin, so daß nach dem Abreißen der Lasche sofort erkennbar ist, daß der Verschluß bereits einmal entfernt worden ist.

Vorzugsweise bestehen der Deckelhauptkörper und der Nebenkörper aus Kunststoff. Beide Teile sind vorzugsweise aus diesem Kunststoff in einem Arbeitsvorgang spritzgegossen.

Ein derartiger Schraubdeckel läßt sich weitgehend automatisch fertigen. Dies bezieht sich auch auf das Bewegen des Nebenkörpers aus seiner Herstellungs-Ausgangslage in die Gebrauchslage.

Weitere Einzelheiten, Merkmale und Vorteile der Erfindung ergeben sich aus der nachfolgenden Beschreibung der in den Zeichnungen rein - schematisch dargestellten Ausführungsbeispiele. Es zeigt:

Fig. 1a bis 1f verschiedene Ansichten einer ersten Ausführungsform eines zugangssicheren, einteiligen Schraubdeckels für flaschenförmige Behälter,

Fig. 2a bis 2g verschiedene Ansichten und Einzelheiten einer zweiten Ausführungsform eines zugangssicheren, einteiligen Schraubdeckels für flaschenförmige Behälter,

Fig. 3a bis 3c die Herstellungsfolge des Schraubdeckels gemäß Fig. 1 nach dem Spritzgießen und

Fig. 4a bis 4d die Herstellungsfolge des Schraubdeckels gemäß Fig. 2 nach dem Spritzgießen.

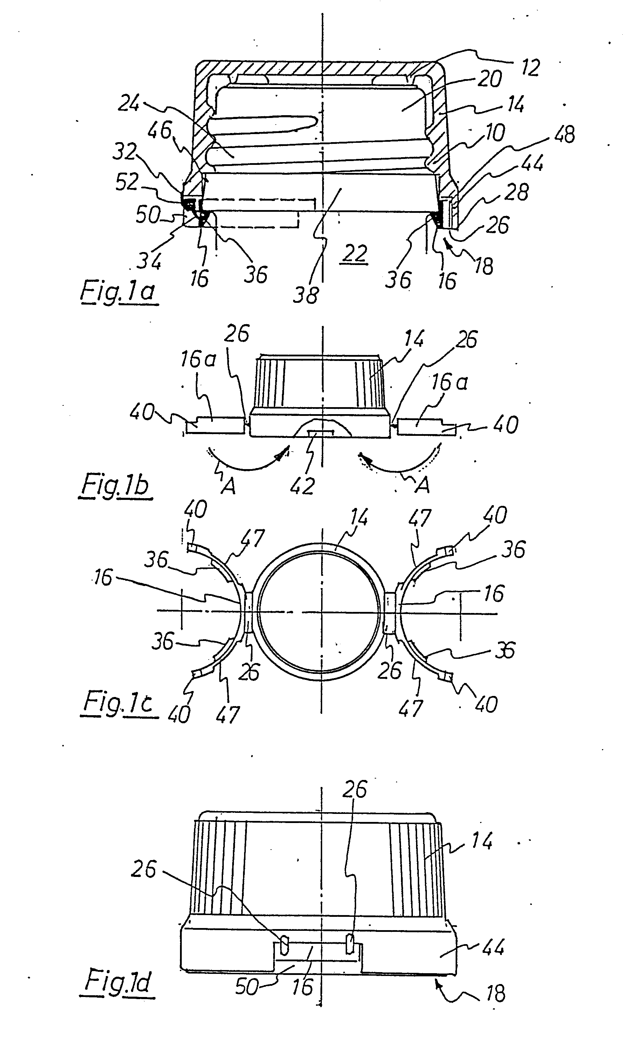

Eine erste Ausführungsform eines zugangssicheren, einteiligen Schraubdeckels ist im Schnitt in Fig. 1a dargestellt. Der Schraubdeckel besteht in der Hauptsache aus einem mit einem Innengewinde (10) und Dichtlippen (12) versehenen Deckelhauptkörper (14) und einem Nebenkörper (16), der im Öffnungsbereich (18) des Schraubdeckels angebracht ist. In Fig. 1a ist der Schraubdeckel (14) im Zusammenhang mit dem unmittelbaren Öffnungsbereich (20) einer nur teilweise dargestellten Flasche (22) dargestellt, wobei das Innengewinde (10) des Schraubdeckels (14) auf ein Außengewinde (24) des Öffnungsbereiches (20) der Flasche (22) aufgeschraubt ist.

In Fig. 1a ist eine Anlenkung des Nebenkörpers (16) mit dem Deckelhauptkörper (14) dargestellt, bei der der Nebenkörper (16) über ein nur schematisch angedeutetes Gelenk (26) am freien Öffnungsrand (28) des Deckelhauptkörpers (14) angebracht und das Gelenk (26) als Sollbruchstelle ausgebildet ist. In der rechten Hälfte der Darstellung ist der Nebenkörper (16), in seiner Gebrauchslage befindlich, auf der Höhe einer Rastnase (36) geschnitten dargestellt. In der linken Hälfte der Fig. 1a ist der Nebenkörper (16) dargestellt, wie er mittels eines Zwischenstücks (52) und eines Gelenks (32) am Deckelhauptkörper (14) angelenkt ist, wobei der Nebenkörper (16) über ein weiteres Gelenk (34) mit dem Zwischenstück (52) verbunden ist. Diese Ausführungsvariante wird später anhand der Fig. 1e und 1f näher erläutert. Anstatt dieses Doppelgelenks kann auch ein Einfachgelenk ausgebildet sein.

Der Nebenkörper (16) ist in der in Fig. 1a dargestellten Gebrauchslage hinter einer Schulter (38) der Flasche (22) verrastet.

Fig. 1b zeigt schematisch eine Seitenansicht des Schraubdeckels, wie er unmittelbar nach dem Spritzgießen aussieht, sofern der Schraubdeckel aus Kunststoff hergestellt ist. In diesem Zustand ragen die Nebenkörper (16) in etwa in der Öffnungsebene des Schraubdeckels radial und diametral nach außen weg, so daß in diesem gespritzten Zustand ein einfaches Entformen möglich ist. Aus Fig. 1b ist ersichtlich, daß der Nebenkörper mit einer Halteverbindungsanordnung versehen ist, die auf der Seite des Nebenkörpers aus einem Rastvorsprung (40) und aus der Seite des Deckelhauptkörpers (14) aus einer Rastausnehmung (42) besteht.

Entsprechend der Darstellung in Fig. 1b und 1c sind symmetrisch und diametral gegenüberliegend zwei Nebenkörper vorgesehen, obwohl im Grund genommen nur ein einziger solcher Nebenkörper notwendig ist.

Entsprechend der Darstellung in Fig. 1c sind die Nebenkörper (16) als halbkreisförmige Ringkörper ausgebildet, die sich an oder in den Öffnungsrand (44) des Deckelhauptkörpers (14) anlegen, wie dies in Fig. 1a dargestellt ist, wenn die Nebenkörper gemäß denen in Fig. 1b dargestellten Pfeilen A eingeschwenkt werden. An der Innenseite dieser Ringkörper befinden sich entsprechend der Darstellung die bereits erwähnten Rastnasen (36). An der diesen Rastnasen (36) radial abgewandten Stelle der Außenseite dieser Ringkörper befinden sich Ausnehmungen (47). Wenn die Nebenkörper (16) entsprechend den Pfeilen A in Fig. 1b eingeschwenkt sind, sind die Rastvorsprünge (40) in den Rastausnehmungen (42), die am Umfangsrand (44) des Deckelhauptkörpers (14) ausgebildet sind, fest eingerastet. Wenn in diesem Zustand der Schraubdeckel auf das Außengewinde (24) der Flache aufgeschraubt wird, so gleiten gegen Ende des Aufschraubvorganges die Rastnasen (36) des Nebenkörpers (16) über eine Schrägfläche (46) der Schulter (38) der Flasche (22). Innerhalb des Öffnungsrandes (44) des Deckelhauptkörpers (14) befindet sich eine Ausnehmung (48) (rechte Seite der Fig. 1a), die nach außen hin geschlossen ist, oder aber eine durchgehende Öffnung (50) (linke Seite in Fig. 1a), die nach außen hin offen ist, um den Nebenkörper von außen her sichtbar zu machen. Durch die Ausnehmungen (47) kann der Nebenkörper mit seiner Rastnase (36) beim Entlanggleiten an der Schrägfläche (46) der Schulter (38) radial nach außen ausweichen und dann im Endzustand in die Fig. 1a dargestellte Rastlage einschnappen.

Wenn nun der Schraubdeckel nur abgeschraubt wird, so ist die Schulter (38) der Flasche (22) bestrebt, dies zu verhindern, da die Rastvorsprünge (36) nicht über die Schulter (38) rutschen können. Da außerdem die Halteverbindung im Bereich des Rastvorsprungs (40) und der Rastausnehmung (42) stärker dimensioniert ist als die an der Gelenkstelle (26 bzw. 32 und 34) vorgesehene Sollbruchstelle, bricht bei einem bestimmten Kraftaufwand und einem bestimmten Abschrauben des Schraubdeckels die Gelenkstelle, so daß der Nebenkörper an dieser Stelle vom Deckelhauptkörper gelöst ist. Bei einem weiteren Abschrauben des Schraubdeckels löst sich die Halteverbindungsanordnung im Bereich des Rastvorsprungs (40) und der Rastausnehmung (42), so daß sich Nebenkörper (16) vollständig vom Deckelhauptkörper (14) löst. Wenn der Nebenkörper dabei einseitig vorgesehen ist, bleibt dieser auch nicht an der Flasche selbst hängen. Bei der beidseitigen Anordnung des Nebenkörpers fallen beide Teile von der Flasche ab, da der Nebenkörper als solcher geteilt ist.

Bei der Doppelgelenkanordnung auf der linken Seite der Fig. 1a wird die Gelenkstelle (32) als Sollbruchstelle vorgesehen, damit auch das Zwischenstück (30) beim Abschrauben sich vom Deckelhauptteil (14) lösen kann. Allerdings besteht natürlich auch die Möglichkeit, die Gelenkstelle (34) als Sollbruchstelle auszubilden.

Wenn nun der Versuch unternommen wird, den abgerissenen Nebenkorper wieder in den Deckelhauptkörper (14) einzubringen und dann den Schraubdeckel auf die Flasche aufzuschrauben, so sind die in Fig. 1d als Stege ausgebildeten Gelenke (26) weggebrochen, was für den Betrachter von außen erkennbar ist. Ansonsten kann der Betrachter durch das Fenster (50) leicht feststellen, daß der Nebenkörper nicht mehr vorhanden ist und daher die Flasche bereits einmal geöffnet worden ist.

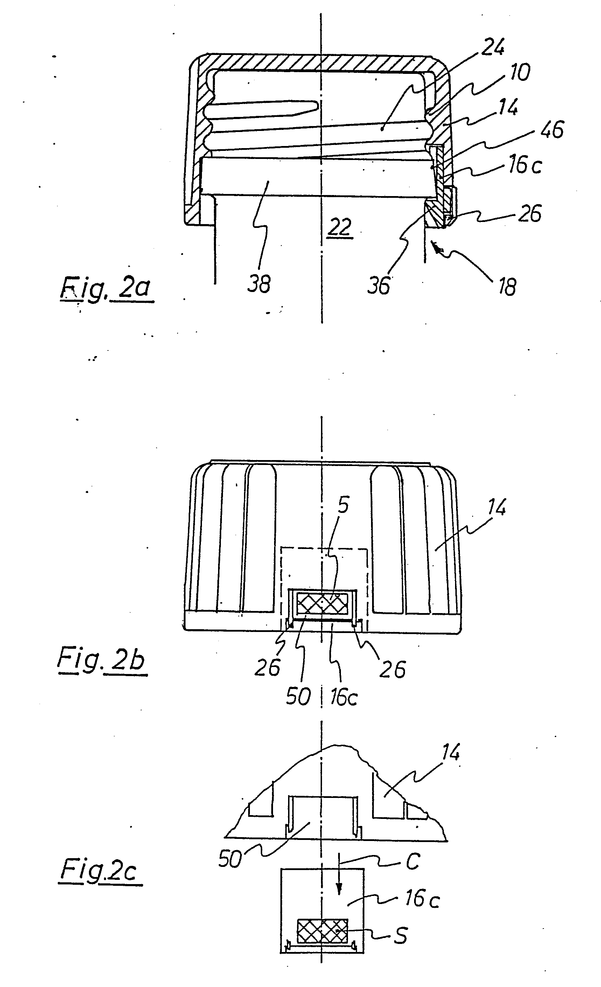

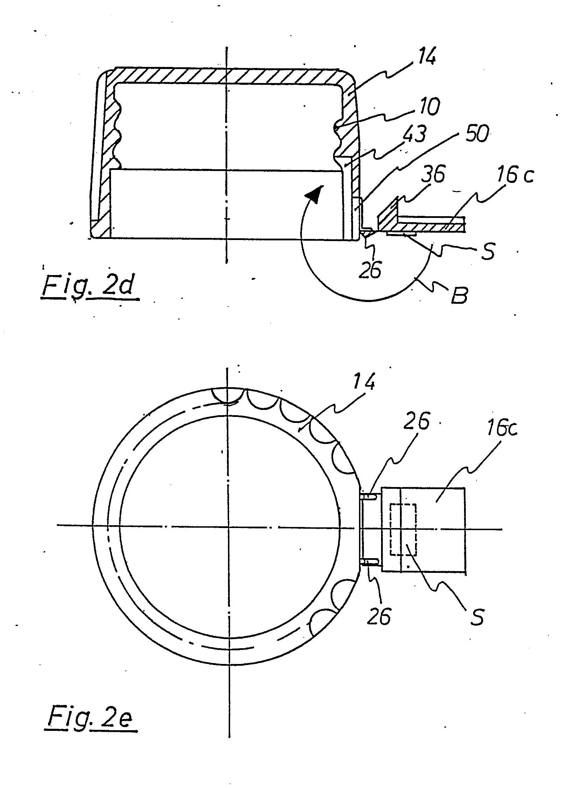

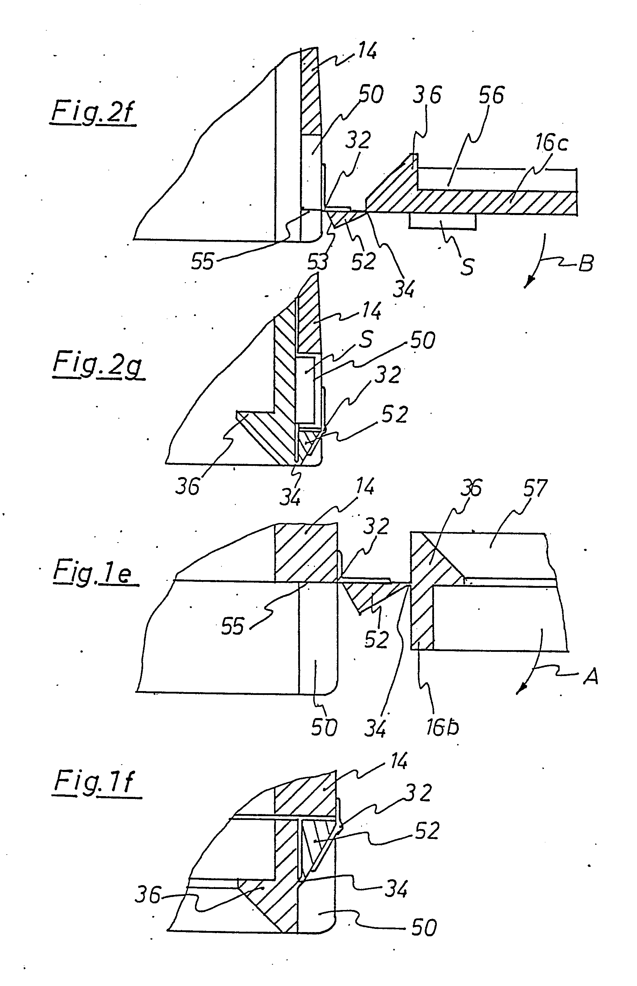

Eine andere Ausführungsvariante ergibt sich aus Fig. 2a bis 2e. Es handelt sich dabei um eine ähnliche Darstellung wie in Fig. 1a. Jedoch hier besteht der Nebenkörper (16c) aus einer einseitig angebrachten Lasche in Form eines rechteckigen Lappens, wobei natürlich über den Umfang verteilt mehrere derartiger Nebenkörper (16c) vorgesehen sein können. Dieser Nebenkörper (16c) ist ebenso wie die Nebenkörper (16) einteilig mit dem Deckelhauptkörper (14) aus Kunststoff spritzgegossen, wobei auch hier der Nebenkörper (16c) auf die in Fig. 1b dargestellte radiale Weise absteht. Dies ist in Fig. 2d und (2e) schematisch dargestellt. Das Einklappen des Nebenkörpers (16c) erfolgt entsprechend dem Pfeil B in Fig. 2d, wobei vor dem Aufschrauben der Nebenkörper (16c) nicht bereits in einer Ausnehmung (43) des Deckelhauptkörpers (14) liegen muß, sondern erst dann, wenn der Aufschraubvorgang erfolgt und sich dann der Nebenkörper (16) in diese Ausnehmung (43) drückt. Der Einrastvorgang beim Aufschrauben des Schraubdeckels erfolgt ähnlich wie bei der in Fig. 1 dargestellten ersten Ausführungsform. Beim Abschrauben des Schraubdeckels gemäß Fig. 2 stützt sich zunächst der Nebenkörper (16c) an der Schulter (38) der Flasche ab und kann daher nicht ausweichen, obwohl er in dieser Lage in diesem Bereich nicht mit dem Deckelhauptkörper verbunden bzw. lösbar verbunden ist. Sobald die als Sollbruchstelle ausgebildete Gelenkstelle (26) bei einem bestimmten Kraftaufwand bzw. bei einem bestimmten Abschraubvorgang gebrochen ist, fällt der Nebenkörper (16c) entsprechend der Darstellung in Fig. 2c in Richtung des Pfeiles C ab und löst sich somit sowohl vom Schraubdeckel als auch von der Flasche. Dies ist ein erstes sicheres Kennzeichen dafür, daß bei fehlendem Nebenkörper (16c) die Flasche bereits einmal geöffnet worden ist. Zur weiteren Sicherung kann der Nebenkörper (16c) mit einer Sichtfläche S versehen sein, die durch das Fenster (50) sichtbar ist.

Es ist wesentlich sicherzustellen, daß sich der Nebenkörper definiert und leichter in die Gebrauchslage in den Deckelhauptkörper einschwenken läßt, ohne daß ein zu starkes Rückdrehbestreben vorhanden ist, insbesondere dann, wenn der Nebenkörper in der Gebrauchslage nicht auf besondere Weise festgelegt wird. Außerdem ist es wichtig, daß eine definierte Sollbruchstelle vorhanden ist. Diesbezüglich ist in Übereinstimmung mit der ersten Ausführungsform gemäß Fig. 1 entsprechend der Darstellung in Fig. 1e und 1f und für die zweite Ausführungsform gemäß Fig. 2 in Fig. 2f und 2g eine Ausführungsvariante des Gelenkes dargestellt, das von einer Doppelgelenkanordnung gebildet wird. Diese Doppelgelenkanordnung weist ein Zwischenstück (52) auf, das hier im Querschnitt die Form eines Dreiecks hat. Dieses Zwischenstück (52) ist über ein Gelenk (32) mit dem Deckelhauptkörpern (14) und über ein Gelenk (34) mit dem Nebenkörper (16c bzw. 16) verbunden. Außerdem bildet das Zwischenstück (52) eine Anschlagfläche (53), die in der in Fig. 2g und Fig. 1f dargestellten Endlage an einer Anschlagfläche (55) des Deckelhauptkörpers (14) zur Anlage kommt. Dies hat zur Folge, daß das Gelenk selbst für den Einschwenkvorgang des Nebenkörpers (16c bzw. 16) in Richtung des Pfeiles B bzw. A nicht zu stark verformt werden muß, so daß einerseits nicht bereits beim Einschwenken in die Endlage zu große Kräfte auf die Sollbruchstelle aufgebracht werden und andererseits im eingeschwenkten Zustand kein zu starkes Rückdrehverhalten des Nebenkörpers vorliegt. Nicht zuletzt dadurch ist es auch gewährleistet, daß der Nebenkörper beim Einschwenken leichter in die bestimmte, definierte Endlage gelangt, ohne daß besonders enge Toleranzen eingehalten werden müssen.

Vorzugsweise ist die Gelenkstelle (32) als Sollbruchstelle ausgebildet, damit auch das Zwischenstück nicht am Deckelhauptkörper hängen bleibt. Allerdings kann auch zur weiteren Sicherheit des zugangssicheren Schraubdeckels bzw. der sicheren Erkennung des abgeschraubten Zustandes die Sollbruchstelle auch an der Gelenkstelle (34) vorgesehen sein, so daß in jedem Falle das Zwischenstück (52) als sichtbares Kennzeichen ohne Nebenkörper hängen bleibt, da es sehr schwierig sein wird, den Nebenkörper mit dem Zwischenstück wieder zu verbinden, wenn man beabsichtigt, die bereits geöffnete Flaschen wieder zusammen mit dem Nebenkörper zu schließen.

Wie aus Fig. 2f und 1e erkennbar ist, sind die Nebenkörper (16c und 16) in verschiedener Ausrichtung am Deckelhauptkörper (14) angebracht, wenn der spritzgegossene Zustand betrachtet wird. Dies liegt darin, daß die Nebenkörper in Anpassung an den Deckelhauptkörper unterschiedlich gekrümmt geformt sind. So ist der Nebenkörper (16c) in Anpassung an die Krümmung der Seitenwand des Deckelhauptkörpers innen konkav ausgebildet. Diese konkave Ausnehmung ist in Fig. 2f durch das Bezugzeichen (56) gekennzeichnet. In der in Fig. 2f dargestellten Lage ist der spritzgegossene Gegenstand besser zu entformen. In Fig. 1e ist die Konkavität (57) mit einer um 90° verdrehten Achse vorhanden, so daß die in Fig. 1e dargestellte Stellung des Nebenkörpers (16b) zum Deckelhauptkörper (14) ein leichteres Entformen des Spritzgußgegenstandes erlaubt.

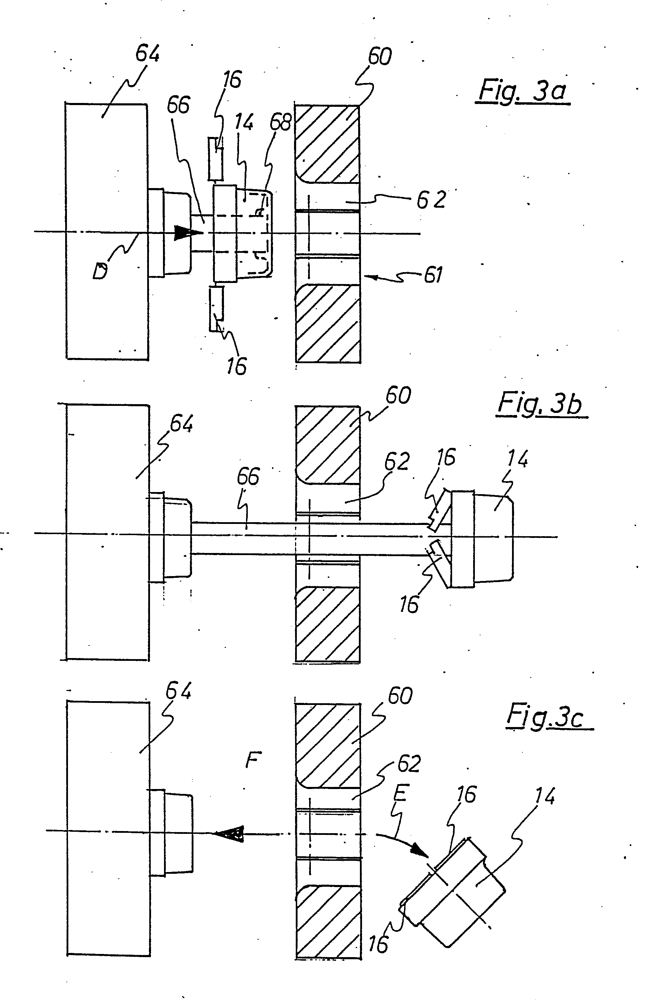

In Fig. 3a bis 3c ist in drei Stufen von rechts nach links der Vorgang dargestellt, durch den die Nebenkörper (16) entsprechend den Pfeilen A in Fig. 1b die Nebenkörper (16) in ihre Gebrauchslage geschwenkt werden. Das Bezugzeichen (64) bezeichnet eine zur Spritzgußmaschine gehörige Ausstoßvorrichtung mit einem Stößel (66). In der in Fig. 3a dargestellten Lage sitzt der Stößel fest aber dennoch lösbar im Deckelhauptkörper (14), begünstigt durch die Vorsprünge (68) im Deckelhauptkörper. Der Ausstoßvorgang aus der Spritzgußmaschine in Richtung des Pfeiles (D) wird dazu ausgenutzt, den spritzgegossenen Schraubdeckel mit dem geschlossenen Ende voraus durch eine Öffnung (61) einer Matrize (60) zu stoßen, wobei die Öffnung durch radial begrenzt und federbelastet bewegbare Klauen (62) gebildet wird. Beim Eindringen des Schraubdeckels durch die Öffnung (61) werden die Klauen (62) radial nach außen gedrückt. Gegen Ende des Durchschiebvorganges des Schraubdeckels durch die Öffnung (61) bringen die sich schließenden Klauen (62) unter Belassung einer Öffnung, die kleiner ist als der Durchmesser des Schraubdeckels, die Nebenkörper (16) in die in Fig. 3b dargestellte Stellung. Dann wird der Stößel (66) entsprechend der Darstellung in Fig. 3c in Richtung des Pfeiles F zurückgezogen, so daß die in der Stellung gemäß Fig. 3d befindlichen Nebenkörper (16) von unten gegen die Klauen (62) stoßen, so daß die Rastvorsprünge (40) in die Rastausnehmungen (42) einrasten, bevor sich der Stößel (66) automatisch vom Schraubdeckel löst und dieser dann in gebrauchsfertigem Zustand in Richtung des Pfeiles E nach unten in ein Behältnis fällt.

Ein ähnlicher Vorgang ist in Fig. 4a bis Fig. 4d für die Ausführungsform gemäß Fig. 2 dargestellt.

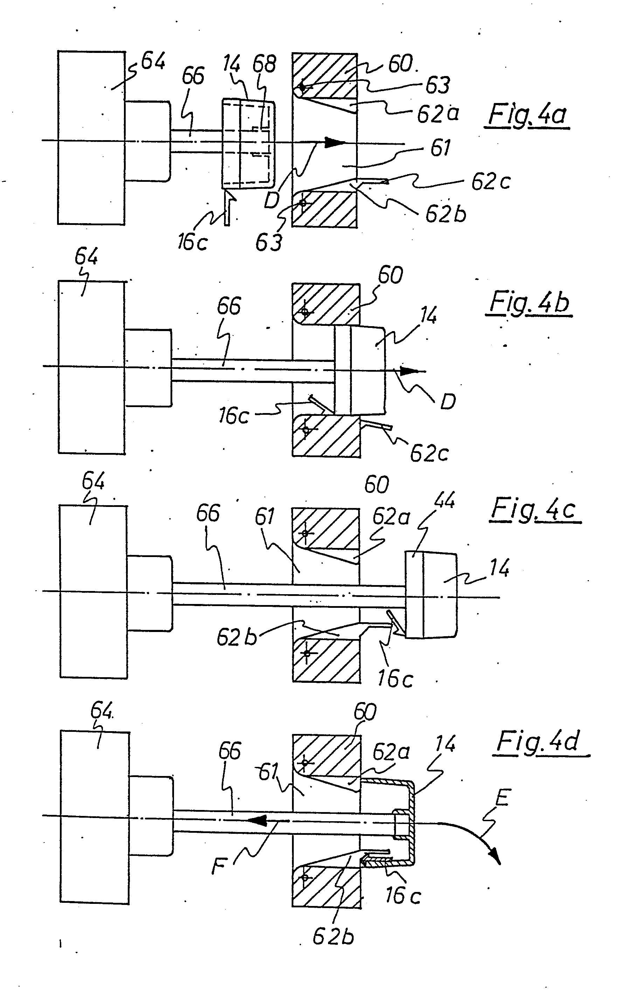

Die Klauen (62a und 62b) sind hier um Achsen (63) schwenkbar dargestellt, wobei unterschiedliche Klauen (62a und 62b) vorgesehen sind. Die Klaue (62b) ist dem Nebenkörper (16c) zugeordnet, so daß diese Klaue (62b) entsprechend der Darstellung in Fig. 4b und 4c den Nebenkörper (16c) in die in Fig. 4c dargestellte Lage bringt, wenn der Stößel (66) den Schraubdeckel vollständig durch die Öffnung (61) der Matrize (60) gestoßen hat. Die Klaue (62b) ist mit einer verlängerten Zunge (62c) versehen, die dann den Nebenkörpker (16c) in das Innere des Deckelhauptkörpers (14) in die Endlage gemäß Fig. 4d bringt, wenn der Stößel (66) in Richtung des Pfeiles F in Fig. 4d zurückgezogen wird, und der Öffnungsrand (44) von unten gegen die wieder zurückbewegten Klauen (62a) und (62b) stößt.

**Ansprüche**

1. Zugangssicherer, einteiliger Schraubdeckel für Behältnisse und insbesondere Flaschen, mit einem ein Innengewinde aufweisenden Deckelhauptkörper und mindestens einem Nebenkörper, der im Öffnungsbereich des Deckelhauptkörpers außerhalb desselben mit diesem einstückig durch ein Gelenk verbunden ist, durch das der Nebenkörper von einer Herstellungs-Ausgangslage in eine Gebrauchslage bringbar ist, wobei der Nebenkörper durch eine Sollbruchstelle mit dem Deckelhauptkörper verbunden und mit mindestens einer Rastnase versehen ist, mit der der Nebenkörper am Ende des Aufschraubvorganges hinter einen Vorsprung des Behältnisses derart rastbar ist, daß beim Abschrauben die Sollbruchstelle bricht, dadurch **gekennzeichnet,** daß das Gelenk (26; 32; 34) als Sollbruchstelle ausgebildet ist.

2. Schraubdeckel nach Anspruch 1, dadurch **gekennzeichnet,** daß das Gelenk (32, 34, 54) als Doppelgelenk mit einem Zwischenstück (52) ausgebildet ist, daß das Zwischenstück (52) über ein erstes Gelenk (32) mit dem Deckelhauptkörper (14) und über ein zweites Gelenk (34) mit dem Nebenkörper (16) verbunden ist.

3. Schraubdeckel nach Anspruch 2, dadurch **gekennzeichnet,** daß eines der beiden Gelenke (32, 34) des Doppelgelenkes als Sollbruchstelle ausgebildet ist.

4. Schraubdeckel nach Anspruch 2, dadurch **gekennzeichnet,** daß beide Gelenke (32, 34) des Doppelgelenkes als Sollbruchstelle ausgebildet sind.

5. Schraubdeckel nach einem der Ansprüche 2 bis 4, dadurch **gekennzeichnet,** daß das Zwischenstück (52) des Doppelgelenkes als Anschlagteil zum Begrenzen der Bewegung des Nebenkörpers (16) in die Gebrauchslage ausgebildet ist.

6. Schraubdeckel nach einem der Ansprüche 1 bis 5, dadurch **gekennzeichnet,** daß das Gelenk oder die Gelenke als sogenanntes Filmscharnier ausgebildet ist bzw. sind.

7. Schraubdeckel nach einem der Ansprüche 1 bis 5, dadurch **gekennzeichnet,** daß das Gelenk oder die Gelenke von mindestens einem Steg gebildet ist bzw. sind.

8. Schraubdeckel nach Anspruch 1, dadurch **gekennzeichnet,** daß der Nebenkörper (16) als Teil eines Ringkörpers ausgebildet ist, der in seiner Gebrauchslage an einen Öffnungsrand (44) des Deckelhauptkörpers (14) anliegt und so durch eine Halteverbindungsanordnung (40, 42) festgelegt ist, daß beim Abschrauben des Deckelhauptkörpers (14) zuerst die Sollbruchstelle (26; 32) bricht und sich dann beim Weiterschrauben die Halteverbindungsanordnung (40, 42) löst.

9. Schraubdeckel nach Anspruch 8, dadurch **gekennzeichnet,** daß diametral gegenüberliegend zwei Ringkörper am Deckelhauptkörper (14) vorgesehen sind.

10. Schraubdeckel nach Anspruch 9, dadurch **gekennzeichnet,** daß die Ringkörper halbkreisförmig ausgebildet und an ihren freien Enden mit Rastvorsprüngen (40) versehen sind, die hinter einer Rastausnehmung (42) am Deckelhauptkörper (14) einrasten.

11. Schraubdeckel nach Anspruch 1, dadurch **gekennzeichnet,** daß der Nebenkörper (16c) als Lasche ausgebildet ist, die mit oder ohne Befestigung an die mit dem Gewinde versehene Innenwand des Deckelhauptkörpers (14) legbar ist.

12. Schraubdeckel nach Anspruch 11, dadurch **gekennzeichnet,** daß die Lasche (16c) in eine an der Innenwand ausgebildete Ausnehmung (43) einlegbar ist.

13. Schraubdeckel nach Anspruch 11 oder 12, dadurch **gekennzeichnet,** daß die Lasche (16c) in der an die Innenwand angelegten Gebrauchslage eine Durchbrechung (50) des Deckelhauptkörpers (14) nach außen schließt.

14. Schraubdeckel nach einem der Ansprüche 1 bis 13, dadurch **gekennzeichnet,** daß der Deckelhauptkörper (14) und der Nebenkörper (16; 16c) aus insbesondere spritzgegossenem Kunststoff bestehen.

15. Schraubdeckel nach einem der Ansprüche 1 bis 14, dadurch **gekennzeichnet,** daß die Rastnase (36) am Nebenkörper (16) in der Gebrauchslage innenliegend ausgebildet ist, und daß radial außerhalb dieser Rastnase (36) eine nach außen hin offene Ausnehmung (47) ausgebildet ist.

16. Verfahren zum Herstellen eines Schraubdeckels gemäß den Ansprüchen 1 bis 15, dadurch **gekennzeichnet,** daß der Schraubdeckel mit seinem offenen Ende voran durch eine Öffnung geschoben wird und daß dabei der oder die abstehenden Nebenkörper von der Herstellungs-Ausgangslage in Richtung auf die Gebrauchslage geschwenkt wird bzw. werden.

17. Verfahren nach Anspruch 16, dadurch gekennzeichnet, daß der · Schraubdeckel mit dem Ausstoßer einer Spritzgußmaschine durch die Öffnung gestoßen wird und dabei der Schraubdeckel die Öffnung, welche einen kleineren Ausgangsquerschnitt hat als die Außenabmessungen des Schraubdeckels, erweitert, so daß das Wiederverengen der Öffnung hinter dem Schraubdeckel die Nebenkörper in Richtung auf die Gebrauchslage bewegt.

18. Verfahren nach Anspruch 17, dadurch gekennzeichnet, daß der Ausstoßer losbar mit dem Schraubdeckel verbunden wird und der Schraubdeckel nach dem Durchstoßen der sich erweiternden und dann sich wieder verengenden Öffnung gegen die verengte Öffnung zurückgezogen wird, wodurch das Anschlagen des Nebenkörpers oder der Nebenkörper an den Öffnungsrandbereich dieser oder diese in die Gebrauchslage gedrückt werden. wonach durch Überschreiten eines bestimmten Kraftaufwands die Verbindung zwischen Ausstoßer und Schraubdeckel gelöst wird.

**Fig.1a**

**Fig.1b**

**Fig.1c**

**Fig.1d**

*Fig. 2a*

*Fig. 2b*

*Fig.2c*

Fig. 2d

Fig. 2e

Fig.2f

Fig.2g

Fig.1e

Fig.1f

0 271 112

Fig. 3a

Fig. 3b

Fig. 3c

Fig. 4a

Fig. 4b

Fig. 4c

Fig. 4d

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | FR-A-2 310 932 (ALCA) <br> * Seite 2, Zeile 28 - Seite 3, Zeile 4; Seite 3, Zeilen 24-32; Figur * <br> --- | 1,8-10, 14 | B 65 D 41/34 |
| A | FR-A-2 525 565 (CEBA) <br> * Seite 4, Anspruch 1; Figuren 1-4 * <br> --- | 1,11,14 | |
| A | FR-A-2 439 140 (SNBP) <br> * Seite 2, Zeilen 14-31; Figuren 1,2 * <br> ----- | 1,14,16 | |

| RECHERCHIERTE SACHGEBIETE (Int. Cl.4) |
|---|
| B 65 D <br> B 67 B |

Der vorliegende Recherchenbericht wurde für alle Patentansprüche erstellt

| Recherchenort | Abschlußdatum der Recherche | Prüfer |
|---|---|---|
| DEN HAAG | 26-02-1988 | BESSY M.J.F.M.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)